# EUROPEAN PATENT APPLICATION

(11) **EP 4 432 644 A1**
(43) Date of publication of application: **18.09.2024**
(21) Application number: 23315050.7
(22) Date of filing: 14.03.2023
(51) Int. Cl.: H04N 1/64

(54) **METHOD OF GENERATING A PALETTE FOR USE IN A PRINTING PROCESS AND PRINTING METHOD**

(71) Applicant: HID Global CID SAS, 92150 Suresnes (FR); HID Global Ireland Teoranta, Galway H91 FKF1 (IE); Université Jean Monnet Saint-Étienne, 42100 Saint-Étienne (FR); Centre national de la recherche scientifique, 75016 Paris (FR)
(72) Inventor: Ayala, Stéphane, 1610 Oron-la-ville (CH); Destouches, Nathalie, 42000 Saint Étienne (FR); Hébert, Mathieu, 69001 Lyon (FR); Dalloz, Nicolas, 92150 Suresnes Cedex (FR); Le, Van Doan, 42000 Saint-Etienne (FR)
(74) Representative: Kramer Barske Schmidtchen Patentanwälte PartG mbB

(57) **Abstract**

A method of generating a reduced palette for use in a printing process is disclosed. In the method, a plurality of images (12) obtainable by varying printing parameters of the printing apparatus (100) are printed, and color values of the same are measured. Based on the color values, a clustering is performed to obtain a plurality of clusters (40) having similar color values. For each cluster, one or more representative images (42, 44) are selected to form the palette. In this manner, images (12) with color values both inside a convex hull (22) and on the convex hull (22) can be included in the palette.

## Description

### Technical Field

The present disclosure generally relates to printing techniques, in particular, to a method of generating a palette for use in a printing process, for example, a laser marking process in the field of identification documents, and a subsequent printing method using such a palette.

### Background

Generally, the color palette with which images are printed, for example, using an inkjet printer, is constrained by the inks that are available (for example, cyan, magenta, yellow and black). In applications such as physical identification documents, it is common to use printing techniques such as laser marking, because this may allow for obtaining image features inside a polycarbonate substrate rather than on a surface of the substrate. When a laser is used to produce colors, it may only be possible to reproduce a limited range of colors, and the link between the laser parameters and the produced colors is not trivial.

WO 2014/075994 A1 discloses a method for laser-structuring a nanoparticle network to generate colored patterns on a support.

US 2021/0039422 A1 discloses a method for building a security image by multiplexing color images.

US 5,070,413 A discloses a halftoning method for creating a color binary image from a continuous tone color image.

US 2007/0097389 A1 discloses a method of adapting a color gamut of an image to be produced onto a set of colors achievable with a printing technique (gamut mapping).

The present disclosure is directed, at least in part, to improving or overcoming one or more aspects of prior systems.

### Summary of the Disclosure

According to one aspect of the present disclosure, a method of generating a palette for use in a printing process using a printing apparatus comprises the step of obtaining at least one color value for each of a first plurality of images printed on a substrate surface or within a substrate by varying one or more parameters of the printing apparatus in a color space. The method further comprises performing a clustering of the (at least one) color values of the first plurality of images in the color space to obtain a predetermined number of clusters of (the at least one) color values. For each of the predetermined number of clusters, at least one representative image is selected (the at least one color value of which is part of the cluster) to obtain a set of images. The at least one color value of each image in the set of images is stored in association with the one or more parameters used to print the image to form the palette.

In another aspect, the present disclosure relates to a method of printing an input image using a palette generated in accordance with the method of the above aspect. The method comprises receiving the input image, retrieving the palette from a memory, performing gamut mapping to map color values of the input image to color values obtainable from the palette, and printing an output image by halftoning using the palette and the gamut-mapped color values of the input image.

In yet another aspect, a method of printing a multiplexed input image that can be observed in a plurality of modes using a palette generated in accordance with the method of the above aspect comprises receiving the multiplexed input image, retrieving the palette from a memory, the palette being a multiplexed palette including a predetermined number of color values in each mode, determining a maximum enclosed box enclosed in a convex hull of the palette in a combined color space, performing gamut mapping to map color values of the input image to color values inside the box, and printing an output image by halftoning using the palette and the gamut-mapped color values of the input image.

In a further aspect, the present disclosure relates to a printing apparatus, preferably a laser marking apparatus, comprising a memory and a control unit configured to perform the method of any one of the preceding aspects.

Other features and aspects of the present disclosure will be apparent from the following description and the accompanying drawings.

### Brief Description of the Drawings

Fig. 1 shows an exemplary range of colors attainable using a printing apparatus,
Fig. 2 shows an example of a reduced color palette generated in accordance with the present disclosure,
Fig. 3 shows an example for an output image generated in accordance with the present disclosure,
Figs. 4A and 4B show schematic illustrations of a clustering of color values in accordance with the present disclosure,
Fig. 5 is an exemplary illustration of a halftoning process using the color palette in accordance with the present disclosure,
Fig. 6 shows an example of two multiplexed images used in the methods of the present disclosure,
Fig. 7 shows an example of a color space to be used in a multiplexing process in accordance with the present disclosure, and
Fig. 8 illustrates a change of a basis performed in a multiplexing process in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that, in particular when using a laser marking/printing apparatus, there is an interest in selecting a few laser parameters that enable reproducing images in the best way possible, by maximizing the color range obtainable from a selected palette. This can be achieved by using empirical measurements of color patches made with the laser marking apparatus, and automatically selecting a color palette from a database of the printed color patches to maximize the quality of image reproduction with the laser marking apparatus.

In particular, it has been realized that the palette should maximize the range of colors accessible by techniques such as halftoning of the colors of the palette. The colors of the palette are then used to reproduce the images with the laser marking apparatus, for example, by vector error diffusion halftoning or the like.

In particular, it has been realized that the palette should be generated in such a manner that it does not include only colors that lie on a convex hull of the color values in a given color space, but also colors that lie inside the convex hull. Accordingly, it has been realized that the method of obtaining the desired number of colors for the palette should not rely only on maximizing the convex hull that is generated by the selected colors, but should also take into account colors that lie inside the convex hull.

In this respect, it has been realized that the above can be achieved in an advantageous manner by performing a clustering of the color values that can be obtained using the laser marking/printing apparatus. In particular, it has been found that a hierarchical or agglomerative clustering can be used in an advantageous manner to select a desired number of clusters and/or images.

It has also been realized that it is possible to immediately obtain a desired number of images by performing the clustering such that, for each cluster, a single color value is selected as a representative color value. In other words, a user can select the desired number of images for the palette, and the clustering algorithm will perform the clustering to obtain this desired number of clusters, where for each cluster a single representative color value (and its associated image) is selected. However, it is also possible to specify the desired number of clusters instead, and, depending on the circumstances, select more than one representative value for certain clusters. For example, if a cluster includes one or more color values that lie on the convex hull, it may be useful to select two or more representative color values for this particular cluster, with one or more of the selected color values lying on the convex hull. In this manner, the convex hull can be maximized, while at the same time taking into consideration color values that lie inside the same. In some applications, the selection of one or more representative color values can also be based on preferred or desired laser parameters associated with the same. For example, it can be beneficial to select color values associated with higher laser powers, because lasers are generally more stable at such higher laser powers.

It has also been realized that the desired number of images in the palette can be selected such that the quality of the input image is preserved as much as possible. In other words, in certain applications, with known types of input images, the number of colors in the palette can be adjusted appropriately to obtain a desired output quality. Here, it has been found that, generally, between ten and several hundreds of color values can be used to form the palette, depending on the application and on the type of input image.

It has also been realized that the automatic selection of the best possible palette can be extended to image multiplexing. In this respect, it has been realized that, in order to achieve the best possible contrast in each mode, and in order to avoid distortions such as ghost images, the gamut mapping and the halftoning technique based on the same have to be adapted. This is achieved by selecting an appropriate region in the combined color space defined by the colors in the different modes. For example, in a three-dimensional combined color space, a rectangular cuboid fitted inside the convex hull of the obtainable colors with a maximum volume is determined as the region of the combined color space. Gamut mapping of the colors of the multiplexed input image is then performed with respect to said region.

In the context of multiplexing of images, it has also been realized that the image quality can be improved by performing a change of basis, optionally in combination with a dimensionality reduction. This can allow for maximizing the volume of the convex hull that can be covered by an axis-aligned box or cuboid. In combination with a projection in order to reduce the dimensionality of the data, this can also maximize the color variance that is retained. Further, it reduces the complexity of the problem and the difficulty of the multiplexing condition. One possibility for performing the change of basis and the dimensionality reduction is the use of a principal component analysis (PCA).

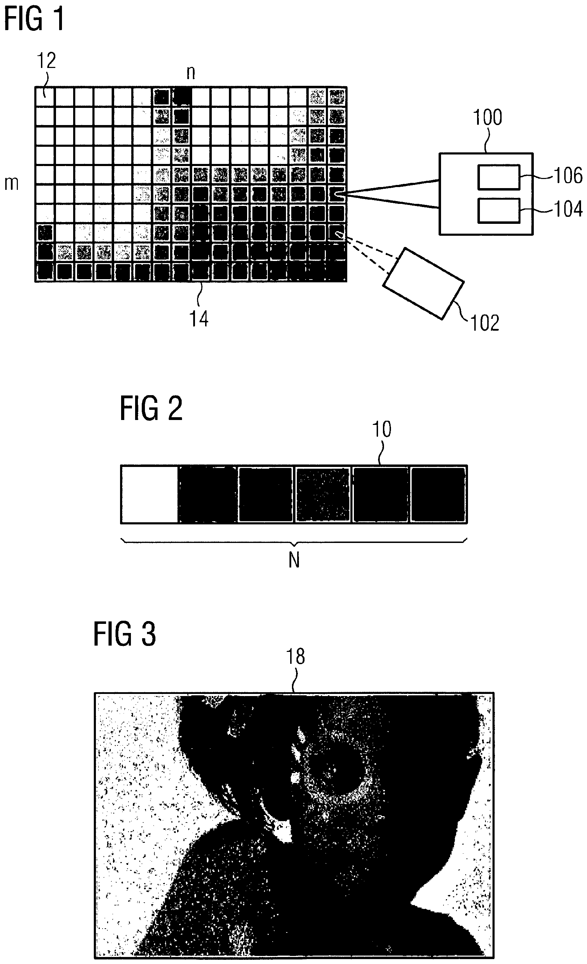

Fig. 1 shows an example of a color palette (in the following, simply referred to as "palette") formed by a plurality of images 12 printed by a printing apparatus 100, in particular, a laser marking apparatus. Printing apparatus 100 is configured to irradiate a substrate surface 14 of a substrate with laser light to modify material on substrate surface 14 or within the substrate. As shown in Fig. 1, printing apparatus 100 includes a control unit 106 and a memory 104, and operates in a known manner to irradiate substrate surface 14 with laser light to modify properties of the substrate for producing different colors.

In the example shown in Fig. 1, printing apparatus 100 is controlled by control unit 106 to print a first plurality of images 12 having mutually different, uniform color values on substrate surface 14 or within the substrate by varying one or more parameters of printing apparatus 100. In particular, in case of printing apparatus 100 being a laser marking apparatus, the parameters may include one or more of: laser power; scanning speed; laser focus; laser spacing; repetition rate; laser polarization; laser wavelength; pulse duration. The material on substrate surface 14 may be a known ink or other coating that reacts to laser light to produce the plurality of different colors.

In some embodiments, one or more of the above-mentioned laser parameters are varied in a stepwise manner to produce the plurality of discrete color values shown in Fig. 1. In the example in Fig. 1, a palette including n × m color values is generated in this manner. Examples for a material that reacts to laser light include, for example, compounds including nanoparticles such as the ones known from WO 2014/075994 A1. In some embodiments, the compound may be a TiO₂ layer including Ag nanoparticles. Of course, any other known material that reacts to laser light and is able to produce different colors can be used. Each different color value in Fig. 1 can be obtained by selecting the appropriate parameters and controlling printing apparatus 100 to irradiate the respective substrate surface with laser light with said selected parameters.

In order to print a desired image, in particular, a color image, it is usually necessary to use image processing techniques such as halftoning, in order to be able to obtain colors that are not directly obtainable by any of the parameters of printing apparatus 100. Such printing techniques are well-known, and a specific one will be described below in more detail.

It will be appreciated that, in principle, all the color values shown in Fig. 1 can be used when printing a desired image. However, if all the different color values were used to print the image, a large number of changes of the parameters of printing apparatus 100 would be necessary. This is generally undesirable, as it increases the time that is required for finalizing the image. Therefore, according to the present disclosure, a method is used for reducing the palette shown in Fig. 1 to a palette that includes only a desired number of color values, said color values resulting in a desired image quality. Such a palette 10 including a predetermined number N of color values from all the n × m obtainable color values shown in Fig. 1 is illustrated in an exemplary manner in Fig. 2. An exemplary process for obtaining palette 10 will be described in more detail below. As will also be described in more detail below, using palette 10, a desired output image 18 shown in Fig. 3 can be printed by printing apparatus 100, for example, by using a halftoning technique or the like.

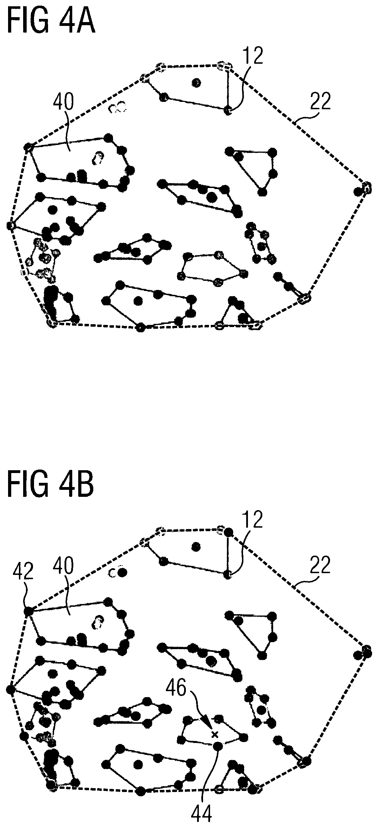

Fig. 4A shows an example of a clustering in accordance with the present disclosure that is used to obtain palette 10. In the example, the clustering may be an agglomerative clustering, which results in a predetermined number M of clusters including color values that are similar to each other. Here, the degree of similarity between two color values can be quantified, for example, by calculating the color distance between the two color values in the given color space in a known manner. It will be appreciated that appropriate clustering algorithms, as described below, will automatically result in a desired number of clusters having similar color values.

As previously mentioned, in a first step, printing apparatus 100 is controlled to print the first plurality of images 12 shown in Fig. 1. As also previously mentioned, each image 12 has a uniform color value. In this respect, the expression "color value" is to be interpreted broadly, as specifying the color of image 12 in any appropriate color space. For example, the RGB or the CIELAB color space can be used to describe the color of image 12. However, it will also be appreciated that any other appropriate color space could be used. For example, filters or appropriate projections could be applied to obtain the color value of each image 12, for example, in a color space with reduced dimensions such as a one-dimensional or two-dimensional color space. For example, in case of a one-dimensional color space, only the lightness of image 12 could be used, or in case of a two-dimensional color space, a chromaticity plane with a fixed luminance value or only the R and G values (with a fixed B value) could be used to describe the color of image 12. It will be appreciated that, generally, the "color value" as used herein is not limited to a single number, and can be a vector comprising a plurality of components (for example, R, G and B in case of the RGB color space).

Regardless of the choice of color space, after printing the plurality of images 12, a color value of each of the first plurality of images 12 in the color space is determined in step 120. For example, as shown in Fig. 1, a color detector 102, for example, a color camera, a colorimeter, a spectrophotometer or any other color measuring device can be used to determine the color of each of the first plurality of images 12. In this manner, a database of obtainable color values cvi ... cv_{n×m} in association with the corresponding parameters of printing apparatus 100 is generated.

It will be appreciated that generating the database can be performed in advance in a calibration process of printing apparatus 100. Therefore, the method of generating palette 10 does not have to include the steps of printing the plurality of images 12 and measuring their color values. Instead, the method may only require a step of obtaining the measured color values, together with the associated printing parameters, for example, by retrieving the same from a memory such as memory 104 of printing apparatus 100. In this manner, the database of obtainable colors only needs to be created once, and the method of generating the reduced palette can be adapted to any particular needs associated with a specific printing process. For example, the number of colors in palette 10 can be adapted, or the number of color components to be used can be changed, etc.

In a subsequent step, a clustering of the color values of the first plurality of images in the color space is performed to obtain a predetermined number M of clusters 40 of color values. As previously mentioned, each cluster 40 comprises color values that are similar to each other. A will be explained in more detail below, the predetermined number M of clusters may be the same as the (predetermined) number N of images in reduced palette 10. In other embodiments, however, the number N of images in reduced palette may be greater than the predetermined number M of clusters.

As shown in Fig. 4B, for each of the predetermined number M of clusters 40, at least one representative image 42, 44 (indicated by its color value in the drawing) is selected. The color value of the at least one representative image 42, 44 is part of the respective cluster 40. In this manner, a set of images 12 for palette 10 is obtained, the set of images being formed by all representative images 42, 44 of the predetermined number M of clusters.

After obtaining the set of images 12, the color value of each image in said set of images is stored in association with the one or more parameters used to print the image to form palette 10.

As also shown in Fig. 4B, in accordance with the present disclosure, the representative color values (and the associated representative images 42, 44) may be selected differently for clusters 40 including at least one color value that lies on a convex hull 22 of the color values of the first plurality of images 12 in the color space, and clusters 40 that do not include at least one color value on convex hull 22. According to the present disclosure, the method may include a further step of determining convex hull 22 of the color values of the first plurality of images 12 in the color space. Next, for each of the predetermined number M of clusters 40, the following steps are performed: determining whether at least one of the color values lies on convex hull 22; if yes, selecting an image 12 with its color value on convex hull 22 as the at least one representative image 42 of cluster 40; if no, selecting an image 12 with its color value having a smallest color distance to a centroid 46 of the cluster as the at least one representative image 44 of cluster 40. Here, the calculation of a centroid (geometrical center) 46 of a given cluster is known by the skilled person, and can be easily performed based on color distances in the given color space. Of course, it will be appreciated that it may also be contemplated to select the at least one representative image in the same manner for all clusters 40, for example, with its color value having a smallest color distance to centroid 46 of the cluster.

As a result, for clusters 40 that lie completely inside convex hull 44, for example, a single representative image 44, the color value of which is closest to centroid 46, is selected. On the other hand, for clusters that include at least one color value that lies on convex hull 22, said at least one color value is selected to obtain the associated at least one representative image 42.

Here, it may be desired or sufficient that a single representative image 42, 44 is selected for each cluster 40, as shown in Fig. 4B. As can also be seen from the example in Fig. 4B, there may be clusters 40 that include more than one color value that lies on convex hull 22. In such a case, it may be desired to either select an image 12 with its color value lying on convex hull 22 and having a smallest color distance to centroid 46 of the cluster as the at least one representative image 42 of cluster 40, and/or determine whether a color distance of two of the color values on convex hull 22 is greater than a threshold, and, if the color distance is greater than the threshold, selecting the associated images as the at least one representative image 42 of cluster 40.

From the above, it will be evident that there may be cases in which only a single color value is selected, and cases in which, for example, two or more color values are selected for a given cluster 40. In other words, in order to increase the flexibility with respect to the number of representative color values that are selected for each cluster, it may be advantageous to not specify the predetermined number N of images that should form the palette, but to instead specify the predetermined number M of clusters that should be used to determine the representative images that form palette 10. Generally, the number N should not be much greater than the number M, and should not result in a significant increase in the processing time during a subsequent printing process. On the other hand, if it is of importance to assure that only a specific number of images are present in palette 10, only a single representative image can be selected for each cluster, as described above.

Here, it will be appreciated that any appropriate clustering, in particular, a hierarchical clustering or the like, can be used to determine clusters 40 (i.e,, determine the predetermined number M of clusters 40). In one example, the clustering algorithm may be an agglomerative clustering, which is a bottom-up approach, where initially each of the color values of the first plurality of images 12 is an initial cluster 40. In other words, in a first step, the number of clusters 40 is the same as the number of images in the first plurality of images.

Using the following algorithm, the predetermined number M of clusters can be obtained. Namely, first a color distance between each pair of clusters 40 is determined, the color distance being defined by a color distance between respective centroids 46 of the clusters 40. Based on the obtained color distances, the two clusters 40 having the smallest color distance are merged to form a new cluster 40. The above two steps are repeated until the number of remaining clusters is equal to the predetermined number M of clusters. In this manner, for example, an arrangement of clusters 40 as shown in Fig. 4A can be obtained. Here, it will be evident that at least some clusters will include color values that lie on convex hull 22, which is defined by the color values of all images in the first plurality of images 12. After the predetermined number M of clusters has been obtained, the representative color values/images can be selected in the above-described manner. Here, the predetermined number M of clusters may be between 10 and 300, preferably between 15 and 215, more preferably between 30 and 150. Of course, it will be appreciated that, if only a single representative image is selected for each cluster, the predetermined number M of clusters will be the same as the predetermined number N of images that should form palette 10.

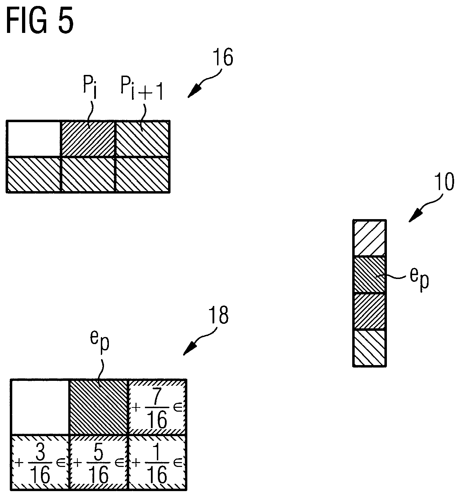

Using palette 10 generated in the above-described manner, a subsequent printing process of an input image 16 (part of which is shown in Fig. 5) can be performed in the following manner: In a first step, input image 16 is received by printing apparatus 100. Then, palette 10 is retrieved from a memory such as memory 104 of printing apparatus 100. Palette 10 was previously generated in accordance with the methods disclosed herein and includes a predetermined number N of colors obtainable by printing apparatus 100 and to be used for the printing. As previously mentioned, palette 10 can be newly created based on the database of all obtainable colors, for example, for a given number of printing operations or even for a single printing operation involving a single input image. In this manner, it may be possible to select the optimum reduced palette 10 for a given input image depending on the properties of the same.

In the next step, gamut mapping is performed on input image 16 to map color values of input image 16 to color values obtainable from palette 10. The process of gamut mapping is known, for example, from US 2007/0097389 A1, such that the details will be omitted herein. Generally, the gamut mapping can be understood as mapping the color values of input image 16 to corresponding color values that are inside the gamut description (e.g., the convex hull or other mathematical shapes) defined or spanned by the colors in palette 10 (including, for example, colors which can be obtained by a selected halftoning process). The result of this process is that color values that are outside of the range obtainable with palette 10 are mapped to color values that are obtainable with said palette.

After gamut mapping of the color values of input image 16, an output image 18 is printed by halftoning using palette 10 and the gamut-mapped color values of input image 16. Halftoning techniques are also well-known, such that details of the same will be omitted. For the sake of illustration, one technique, which is known as "vector error diffusion" (see also US 5,070,413 A) will be briefly described with reference to Fig. 5.

As shown in Fig. 5, a color value of a pixel pᵢ of input image 16 is compared to the color values of each entry in palette 10, to determine the best match. Here, the skilled person immediately recognizes how the best match can be determined, namely, by determining the entry in palette 10 that has the least distance from the color value of pixel pᵢ in the selected color space using an appropriate metric. For example, entry eₚ may be determined as the best match in palette 10 for pixel pᵢ. Then, the color value of entry eₚ is used as the color value of the pixel corresponding to pixel pᵢ in output image 18. Again, it will be appreciated that the color value can be any multi-dimensional value (vector), depending on the color representation that is used. For example, the color value eₚ could be a three-component vector with components Rₚ, Gₚ and Bₚ in case of the RGB color space.

Generally, there will be a deviation between the color value of palette 10 and the color value of the input image for each pixel. To diffuse this error, an error vector ε is defined as the difference between the color value of the pixel of the input image and the color value of the entry in palette 10. For example, in RGB color space, the vector has components R-Rₚ, G-Gₚ, B-Bₚ. This error vector is then added to the color values of subsequent pixels pi+i, ... in input image 16. For example, 7/16 ε is added to the color value of pixel pᵢ₊₁, where ε is the error vector. The color value resulting from the color value of pixel pᵢ₊₁ of input image 16 and the added error vector then forms the basis for determining the best match between the color value of the input image and the color values in palette 10. The process will then be repeated to obtain output image 18 that includes only color values that are present in palette 10. As a result, output image 18 can be obtained using the reduced palette.

The above-described methods can also be used in connection with multiplexing of images. Printing of multiplexed images is particularly advantageous when said images form part of a security feature, for example, of identification documents or the like. Such multiplexed images are formed by pixels having different color values when viewed under different conditions. For example, an image viewed in transmission may have a first appearance, and the same image viewed under backside reflection may have a different, second appearance. Multiplexing of such images is known, for example, from US 2021/0039422 A1, such that a detailed description will be omitted herein. In the context of the present application, however, using inks or other compounds that exhibit such properties, the process of printing all obtainable colors using printing apparatus 100 explained above with reference to Fig. 1 results in that two palettes similar to the palette shown in Fig. 1 are obtained when the resulting images 12 are viewed under two conditions. Here, it will be appreciated that the number two is only an example, and any obtainable number of different images (3, 4, 5, etc.) may be used in accordance with the present disclosure. For the sake of simplicity, however, in the following, the case of two multiplexed images will be described.

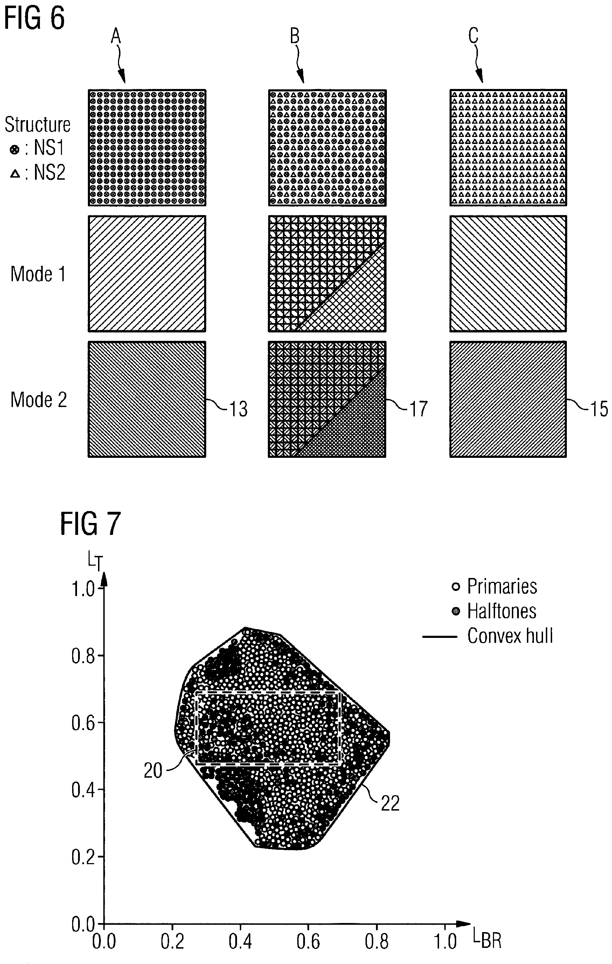

Fig. 6 shows a schematic representation of a first image 13 and a second image 15 of the plurality of images obtained using printing apparatus 100. In Fig. 6, image 13 is obtained using a first set of parameters of printing apparatus 100, and image 15 is obtained using a second set of parameters of printing apparatus 100. When viewed in a first mode (under a first observation condition), each of images 13 and 15 has a first appearance (a respective color value) shown in the second row of Fig. 6, and when viewed in a second mode (under a second observation condition different from the first observation condition), each image has a different appearance (color value) shown in the third row. Intermediate colors in each mode can again be obtained by performing a process such as halftoning, for example, using a checkerboard pattern of the color values of first image 13 and second image 15, as exemplified in the second column of Fig. 6. Here, the last two images shown in the second column of Fig. 6 show the checkerboard pattern on the upper left side, and on the lower right side the color that is observed when viewing the checkerboard pattern from a distance is shown.

In principle, the above-described method of determining a predetermined number N of color values in a reduced palette can be applied to the case of multiplexing of images in a straightforward manner. For example, in case of two RGB images to be multiplexed, for each image 12, two three-dimensional color values (the values R, G and B in the first mode and the values R, G and B in the second mode) can be measured using measuring device 102 in the two modes. All measured pairs of color values are then used to populate the corresponding combined color space, which in this case is six-dimensional. Further, using an appropriate metric, the above-described clusters can be calculated (for example, by performing an appropriate multi-dimensional clustering in a known manner). Each cluster includes the two (or more) color values of the associated images 12. The resulting clusters can then again be used to calculate a reduced multiplexed palette 10, the multiplexed palette including a first color value in a first mode and a second color value in a second mode, in association with the corresponding parameters of printing apparatus 100. The resulting palette 10 is then used to print a desired image.

In principle, the printing of the multiplexed image could be performed in an analogous manner as the printing described above with respect to the non-multiplexed images. In other words, the steps of gamut mapping and halftoning could be extended in a straightforward manner to the multiplexed case. However, it is important to realize that the two modes are not completely independent. In other words, when gamut mapping is performed for the colors in the first mode, this may result in that the corresponding colors in the second mode are not inside the reproducible gamut. This may result in artifacts and ghost images in the multiplexed image. Therefore, a further step is necessary to avoid such artifacts. This will be described below in a first illustrative example in which two monochrome images are multiplexed.

As shown in Fig. 7, in case of two monochrome images, only a single color value (lightness) is present in each of the modes. In other words, for each image, a lightness L_{T} in a first mode such as transmission is measured, and a second lightness L_{BR} is determined for a second mode such as backside reflection. The resulting color space is a two-dimensional space, as shown in Fig. 7. Here, the measurement results of all the colors (primaries) obtainable by a given printing apparatus 100 are shown as white circles. In addition, the colors obtainable by halftoning of the primaries are shown as hatched circles in Fig. 7. Together, the primaries and the halftones define the convex hull 22 containing all obtainable colors. Here, it is immediately evident that, for a given color value in the first mode (for example, L_{T}=0.6), only a subset of color values in the second mode (L_{BR}) can be obtained. In order to be able to successfully multiplex the two images without forming ghost images, a lightness range has to be found for which all lightness pairs are obtainable (for example, by performing appropriate gamut mapping). It is immediately recognized that this is the case for any rectangle that is inside the convex hull 22. Further, it is also recognized that the area of the rectangle is the geometrical mean of the maximum contrast attainable in each mode. Therefore, it follows that maximizing the area of this rectangle allows maximizing the contrast of the produced images. There are several algorithms for finding the maximum area enclosed rectangle inside a given shape of the convex hull (see, for example, the description at http://cgm.cs.mcgill.ca/~athens/cs507/Projects/2003/DanielSud/).

Therefore, in case of multiplexing, the printing process includes, after the steps of receiving the multiplexed input image 16, and retrieving palette 10 from memory 104, the step of determining a maximum enclosed box 20 enclosed in convex hull 22 of palette 10 in the combined color space defined by palette 10. After this maximum enclosed box has been found, gamut mapping of the color values of input image 16 to color values inside box 20 is performed. In this manner, it can be assured that all pairs of color values of the two multiplexed images can be obtained using the reduced palette. Based on this, output image 18 can be printed by halftoning using palette 10 and the gamut-mapped color values of input image 16. This can be done, for example, by a straightforward extension of the exemplary halftoning process described above with respect to Fig. 5 to the dimensions of the combined color space.

In case of higher dimensions, for example, a first image being a monochrome image and a second image having a two-dimensional color value, the resulting combined color space will be a three-dimensional space. In that case, however, a range of possible color values in the subspace defined by the two-dimensional color values is not necessarily a rectangle. The rectangle, i.e. the enclosed box mentioned above, is only an approximation, and the optimization of more complex shapes is a difficult problem. In addition, multiplexed gamut mapping for such complex shapes is also not straightforward.

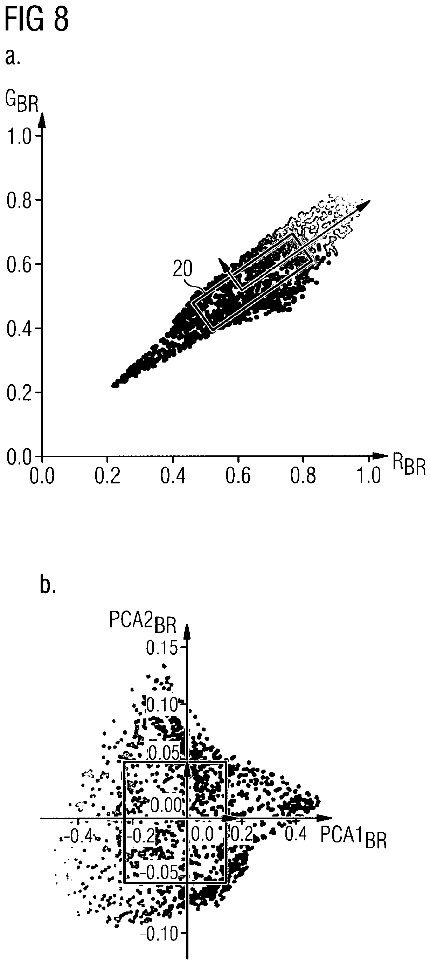

It has been found that the above can be solved by performing a change of basis, optionally in combination with a dimensionality reduction. This will be described below for a further example with reference to Fig. 8. In the example, the first image is a monochrome image described by a color value indicating lightness such as L_{T}. The second mode is a two-dimensional color image described by color values G_{BR} and R_{BR} (with fixed color value B_{BR}). Fig. 8a shows the projection of the multiplexed color values onto a plane having a given lightness L_{T}. In addition, Fig. 8a also shows box 20 defining the maximum enclosed box for the given lightness value L_{T}. As can be seen in Fig. 8, the box is no longer aligned with the axes of the color space. While there are algorithms to find boxes that are not axis-aligned, said algorithms scale poorly with the number of dimensions. Therefore, it is preferable to perform a change of basis in each separate color space to maximize the volume of the convex hull that can be covered by an axis-aligned box. This can be coupled with a projection in order to reduce the dimensionality of the data. There are several algorithms for performing such a change of basis and dimensionality reduction. PCA is the most common algorithm. PCA finds orthogonal axes to represent the data based on the eigenvectors of its covariance matrix. For example, when applying PCA to the R and G colors of the palette, the axes found can be described as PCA1_{BR}= - 0.82R_{BR} - 0.58G_{BR} and PCA2_{BR}= 0.57R_{BR} - 0.82G_{BR}. The resulting axes are shown in Fig. 8b. From Fig. 8, it is evident that performing the change of basis allows finding a larger (three-dimensional) box in the (L_{T}, PCA1_{BR}, PCA2_{BR}) space. Therefore, it is preferable to perform the basis transformation before performing the gamut mapping. Of course, this also requires transforming the image to be multiplexed to the PCA basis before performing the gamut mapping.

To perform the dimensionality reduction, PCA or a similar technique must be applied directly to the original palette images. This is done independently for each mode. When applied to the full color space, up to three eigenvectors will be found, and dimensionality reduction is obtained by ranking the eigenvectors by their variance, and choosing the first or the two first ones. Proceeding in such a manner also allows for reducing the dimensions of, for example, the six-dimensional color space resulting from multiplexing of two full color images to a three-dimensional color space defined by, for example, the palette in the first mode projected onto a single axis PCA0, and the palette in the second mode projected onto the first two axes PCA1' and PCA2'.

It will be appreciated that the above formalism for multiplexed images can be generalized to higher dimensions, and is not limited to the case where the combined color space is a two- or three-dimensional space. In any case, if the change of basis, perhaps in combination with the dimensionality reduction, is applied, it follows that the steps of reducing the number of colors in the palette have to be performed in the multiplexed space after changing the basis. Therefore, in the method for generating the palette in case of a multiplexed image, a further step of reducing a number of dimensions of the combined color space by appropriate processing of the color values in each of the plurality of modes is present. It will be appreciated that the reduction of the number of dimensions can also be used independently from the change of basis mentioned above. In other words, the number of dimensions can also be reduced to obtain a lower-dimensional combined color space, and the maximum enclosed box can be determined in the color space having the reduced dimensions in a straightforward manner.

In other cases, however, the method further comprises performing a change of basis in at least one (or each) of the plurality of modes, and transforming the color values in the at least one (or each) of the plurality of modes to the changed basis. Then, the clustering is performed in the combined color space defined by the changed basis. In some embodiments, the above can be achieved by performing a principal component analysis in each of the plurality of modes, optionally in combination with reducing the number of dimensions, to obtain the combined color space.

As a result, the reduced multiplexed palette is obtained either in the color space after the change of basis, or the original color space. In order to obtain the multiplexed palette, however, it is necessary to transform the colors determined in the color space after the change of basis back to the original color space.

Accordingly, a method of printing a multiplexed input image using a palette generated in accordance with the methods disclosed herein comprises the step of receiving the multiplexed input image, retrieving palette 10 from memory 104, palette 10 being a multiplexed palette including a predetermined number of color values in each mode, and determining a maximum enclosed box 20 enclosed in convex hull 22 of palette 10 in the combined color space. The method further includes performing gamut mapping to map color values of input image 16 to color values inside box 20, and printing output image 18 by halftoning using palette 10 and the gamut-mapped color values of input image 16.

In case a change of basis is performed, the method further comprises transforming color values of input image 16 in each mode to respective bases forming the combined color space prior to performing the gamut mapping to obtain gamut-mapped color values. In other words, the color values of the input image have to be transformed to the combined color space after the transformation, the convex hull in the transformed space is defined by the transformed color values of the reduced multiplexed palette, and the maximum enclosed box 20 is determined in the combined color space after transformation. Then, gamut mapping is performed in the combined color space after transformation to map color values of the input image to color values inside the box. The gamut-mapped color values of the input image are then transformed back to the original color values, and halftoning is performed using the palette 10 and the transformed gamut-mapped color values in the original color space.

### Industrial applicability

With the above-described methods, one or more input images can be printed using a reduced palette including a predetermined number of colors obtainable by a printing apparatus. Preferably, the input image includes at least one color image, and the printing is performed using a laser marking apparatus. In this manner, for example, security features forming part of an identification document or the like can be laser printed using a reduced number of laser parameters associated with the colors in the reduced palette. This scheme can also be applied to multiplexed images, with special care to be taken to avoid the appearance of ghost images or other image distortions.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method of generating a palette (10) for use in a printing process using a printing apparatus (100), the method comprising:
for each of a first plurality of images (12) printed on a substrate surface (14) or within a substrate by varying one or more parameters of the printing apparatus (100), obtaining at least one color value in a color space;
performing a clustering of the color values of the first plurality of images (12) in the color space to obtain a predetermined number (M) of clusters (40) of color values;
for each of the predetermined number (M) of clusters (40), selecting at least one representative image (42, 44) to obtain a set of images (12); and
for each image in the set of images (12), storing the at least one color value of the image in association with the one or more parameters used to print the image to form the palette (10).

2. The method of claim 1, further comprising:
determining a convex hull (22) of the at least one color values of the first plurality of images (12) in the color space;
for each of the predetermined number (M) of clusters (40), performing the following steps:
determining whether at least one of the color values lies on the convex hull (22);
if yes, selecting an image (12) with its at least one color value on the convex hull (22) as the at least one representative image (42) of the cluster (40);
if no, selecting an image (12) with its at least one color value having a smallest color distance to a centroid (46) of the cluster as the at least one representative image (44) of the cluster (40).

3. The method of claim 2, further comprising:
if, for a given cluster (40), two or more of the at least one color values lie on the convex hull (22),
(i) selecting an image (12) with its at least one color value on the convex hull and having a smallest color distance to a centroid (46) of the cluster as the at least one representative image (42) of the cluster (40), and/or
(ii) determining whether a color distance of two of the color values is greater than a threshold, and, if the color distance is greater than the threshold, selecting the associated images as the at least one representative image (42) of the cluster (40).

4. The method of any one of claims 1 to 3, wherein the clustering is an agglomerative clustering, comprising:
a) starting with each of the at least one color values of the first plurality of images (12) as an initial cluster (40);
b) determining a color distance between each pair of clusters (40), the color distance being defined by a color distance between respective centroids (46) of the clusters (40);
c) merging the two clusters (40) having the smallest color distance to form a new cluster (40); and
d) repeating steps b) and c) until the predetermined number (M) of clusters is obtained.

5. The method of any one of claims 1 to 4, wherein a single representative image (42, 44) is selected for each cluster (40).

6. The method of any one of claims 1 to 5, further comprising:
printing (110) the first plurality of images (12) using the printing apparatus; and
obtaining (120) the color values of the first plurality of images by measurement,
wherein the printing apparatus (10) is a laser marking apparatus, and the parameters include one or more of: laser power; scanning speed; laser focus; laser spacing; repetition rate; laser polarization; laser wavelength; pulse duration.

7. The method of any one of claims 1 to 6, wherein the predetermined number (M) is between 10 and 300, preferably between 15 and 250, more preferably between 30 and 150.

8. The method of any one of claims 1 to 7, wherein each of the images (12) is a multiplexed image that can be observed in a plurality of modes and has different color values in the plurality of modes, the method comprising:
obtaining the color values of each of the plurality of images (12) in the plurality of modes; and
performing the clustering in a combined color space defined by the color values in the plurality of modes.

9. The method of claim 8, further comprising:
reducing a number of dimensions of the combined color space by appropriate processing of the color values in each of the plurality of modes.

10. The method of claim 8 or 9, further comprising:
performing a change of basis for at least one of the plurality of modes;
transforming the color values in the at least one of the plurality of modes to the changed basis; and
performing the clustering in the combined color space defined at least in part by the at least one changed basis.

11. The method of claim 10, further comprising:
performing a principal component analysis in the at least one of the plurality of modes, optionally in combination with reducing a number of dimensions, to obtain the combined color space.

12. A method of printing an input image (16) using a palette (10) generated in accordance with the method of any one of the preceding claims, the method comprising:
receiving the input image (16);
retrieving the palette (10) from a memory (104);
performing gamut mapping to map color values of the input image (16) to color values obtainable from the palette (10); and
printing an output image (18) by halftoning using the palette (10) and the gamut-mapped color values of the input image (16).

13. A method of printing a multiplexed input image (16) using a palette (10) generated in accordance with the method of any one of claims 8 to 11, the method comprising:
receiving the multiplexed input image (16);
retrieving the palette (10) from a memory (104), the palette (10) being a multiplexed palette including a predetermined number (N) of color values in each mode;
determining a maximum enclosed box (20) enclosed in a convex hull (22) of the palette (10) in the combined color space;
performing gamut mapping to map color values of the input image (16) to color values inside the box (20); and
printing an output image (18) by halftoning using the palette (10) and the gamut-mapped color values of the input image (16).

14. The method of claim 13, further comprising:
transforming color values of the input image (16) in each mode to respective bases forming the combined color space prior to performing the gamut mapping to obtain gamut-mapped color values;
transforming the gamut-mapped color values of the input image back to the original color values; and
performing halftoning using the palette (10) and the transformed gamut-mapped color values.

15. A printing apparatus (100), preferably a laser marking apparatus, comprising;
a memory (104); and
a control unit (106) configured to perform the method of any one of the preceding claims.
